# EUROPEAN PATENT SPECIFICATION

(11) **EP 1 430 160 B1**
(45) Date of publication and mention of the grant of the patent: **09.08.2006**
(21) Application number: 02801979.2
(22) Date of filing: 23.09.2002
(51) Int. Cl.: C22C 32/00, A01L 3/00, A01L 1/00, C22C 29/14, G11B 5/82

(54) **METAL MATRIX COMPOSITES OF ALUMINUM, MAGNESIUM AND TITANIUM USING CALCIUM HEXABORIDE**
VERBUNDWERKSTOFFE MIT METALLISCHER MATRIX AUS AL, MG OR TI MIT CALCIUM HEXABORID
COMPOSITES A MATRICE METALLIQUE D'ALUMINIUM, DE MAGNESIUM ET DE TITANE PRODUITS A BASE D'HEXABORURE DE CALCIUM,

(30) Priority: 24.09.2001 US 961523; 08.05.2002 US 141320
(43) Date of publication of application: 23.06.2004
(73) Proprietor: Saffil Limited, Widnes, Cheshire WA8 0RY (GB)
(72) Inventor: WEAVER, Samuel, C., Knoxville, TN 37032 (US)
(74) Representative: Müller-Boré & Partner Patentanwälte
(86) International application number: PCT/IB2002/004269
(87) International publication number: WO 2003/035919

(56) References cited:
- US-A- 1 913 373
- US-A- 4 513 824
- US-A- 5 573 607
- US-A1- 2001 010 870
- US-A1- 2002 153 144
- US-B1- 6 200 526
- ANTONY, K.C. ET AL.: "Metallurgical Stability of several Boride Dispersions Systems" U.S. AT. ENERGY COMM. (1960), GEAP-3530, 25 PP., 1960, pages 1-25, XP002232325

## Description

The present invention relates generally to the improved mechanical and physical properties including strength, elastic modulus and reduced thermal expansion of metal bodies by using metal matrix composites, and more particularly to the reinforcement of aluminum, magnesium and titanium by forming metal matrix composites of those metals using calcium hexaboride particles.

The light weight metals of aluminum and magnesium have very large markets for they are utilized in a wide variety of industries. In a lesser way, titanium is also utilized as a light weight fabrication material. These metals suffer from some drawbacks, however, which limit their usefulness. These include low stiffness (low modulus of elasticity), high thermal coefficient of expansion, and low strength. Some of these drawbacks have been overcome through the use of metal matrix composites of these metals. Typically, metal matrix composites are composed by adding ceramics to the metals. The primary objectives of these ceramic additives have been to increase the modulus of elasticity and to reduce the thermal coefficient of expansion. When fibrous material, such as silicon carbide whiskers, are added, strengthening has been observed. Other added materials include the fibers of boron metal, carbon, aluminum silicate, and aluminum oxide, Still other typical strengthening agents are aluminum oxide particulates, boron carbide and silicon carbide in various forms.

Of these, only aluminum oxide particulate and silicon carbide particulate have been extensively utilized in the aluminum-based matrix. To add either of these to molten aluminum, a continuous stirring action must be utilized because the specific gravity of the additives are significantly greater than the molten aluminum. This means that constant agitation of the aluminum/additive mixture is required to keep the additive in substantially uniform distribution throughout the molten aluminum. Similar problems are encountered for mixtures of the same additive with molten magnesium. Stirring the molten metal can keep the additive distributed throughout the molten metal, but such continuous stirring causes oxide inclusions and hydrogen to contaminate the melts.

Furthermore, because of the contamination and the non-uniform nature of the metal matrix composites, remelting (for recycle, etc.) is a problem due to the variability of the resulting feed product.

In the prior art, various methods and compositions have been developed to overcome these difficulties. In some instances, powdered metal processes have been used to make metal matrix composite materials. For example, U.S. Patent 5,573,607 describes a metal matrix composite wherein particles of silicon boride are combined with aluminum, magnesium or titanium to form a metal matrix composite. According to the process therein described, the silicon boride particles can be either pre-blended with the metal particles or stirred into the melt to form the metal matrix. Other examples of the use of powder metallurgy for the manufacture of metal matrix composite materials are shown and described in U.S. Patent 5,712,014 which describes the use of boron carbide in the preparation of the metal matrix composite; and in U.S. Patent 5,948,495 which describes the use of powder metallurgical techniques to make an aluminum /ceramic disk substrate.

US 6,200,526 discloses a metal in filtration process, wherein the metal phase is infiltrated into porous ceramic body.

### OBJECTS OF THE INVENTION

Accordingly, it is an object of the present invention to provide a memory disk substrate comprising a metal matrix composite using molten metal of aluminum, magnesium and titanium wherein a minimum of stirring is required to maintain particles of the additive agent in suspension.

It is another object of the present invention to provide a memory disk substrate comprising a metal matrix composite wherein the strengthening agent has a specific gravity similar to that of the molten metal whereby there is little settling of the additive particles during the formation of the metal matrix composite.

It is a further object of the present invention to provide a memory disk substrate comprising a metal matrix composite wherein the additive particles increases the ductility of the metal matrix composite.

It is a further object of the disclosed invention to provide a memory disk substrate comprising a metal matrix composite material from a substantially uniform mixture of metal particles and ceramic material particles. It is a further object of the disclosed invention to provide a memory disk substrate comprising a metal matrix composite material of given properties by combining solid metal particles with solid ceramic particles with the proportion of the metal particles being selected relative to the proportion of ceramic particles.

It is a further object of the disclosed invention to provide a memory disk substrate comprising a disk of metal matrix composite wherein the composite is made by combining solid metal particles with solid ceramic particles.

Further and other objects of the present invention will become apparent from the description contained herein.

These objects are achieved by the embodiments as characterized in the claims.

In accordance with one aspect of the present invention, a new and improved memory disk substrate comprising metal matrix composite formed from a molten metal selected from the group consisting of aluminum, magnesium, titanium and mixtures thereof, and particles of calcium hexaboride. The amount of calcium hexaboride particles present in the metal is in the range of about 0.1 to about 80 wt. %.

Preferably, the metal is in the range of 50% to 99% by weight of the composite material and the ceramic is in the range of 1% to 50% by weight of the composite material. More preferably, the metal matrix composite can be tailored to have a modulus of elasticity in the range of 70 to 180 Giga Pascals ("GPa") and can be tailored to have a coefficient of thermal expansion in the range of 8.9 to 21.5 ppm/°K.

A metal matrix composite was fabricated by adding particles of calcium hexaboride to molten aluminum. The calcium hexaboride was supplied by WACKER-CHEMIE of Kempten Germany. Since the specific gravity of the calcium hexaboride is very close to that of aluminum, only a minimal amount of stirring was required to achieve a homogeneous mixture. If heating is accomplished in an induction furnace, a stirring action is automatically achieved. Some mechanical stirring is required under other conditions of heating.

While a range of compositions of from about 0.1 wt. % to about 80 wt. % of calcium hexaboride can be utilized relative to the aluminum, a range of about 5 to about 40 wt. % is most practical for most applications and was utilized for testing. The calcium hexaboride typically has an average particle size range of about 0.1 to about 200 microns. The resultant metal matrix is light weight has improved strength, increased ductility and reduced thermal coefficient of expansion.

The addition of the calcium hexaboride to the molten metal was principally utilized in the development of the present invention. However, it will be understood that the invention also includes the blending of the calcium hexaboride particles with powdered aluminum metal and any other alloying constituents prior to melting the mixture.

The molten mixture can be cast into a desired shape as memory disk substrates which would benefit from the improved mechanical and physical properties of the metal matrix composite of this invention.

### Example 1. (Reference Example)

A metal matrix composite horseshoe was made from an aluminum matrix composite. The aluminum matrix composite contained from about 5 to about 10 wt% calcium hexaboride particles having an average particle size of about 75 microns and the remainder being A356 aluminum metal. The resulting horseshoe was light, strong, abrasion resistant and unexpectedly ductile. The horseshoe could be bent at an angle of 45 degrees without damage.

### Example 2.

A metal matrix composite memory disk substrate was made from an aluminum matrix composite. The aluminum matrix composite contained from about 40 wt % calcium hexaboride particles having an average particle size of about 10 mircrons and the remainder being aluminum metal.

### Example 3. (Reference Example)

A metal matrix composite actuator arm for a hard drive was made from an aluminum matrix composite. The aluminum matrix composite contained about 30 wt% calcium hexaboride particles having an average particle size of about 50 microns and the remainder being A356 aluminum metal.

Magnesium and titanium have low specific gravities similar to that of aluminum.

From the foregoing, it will be understood that improved metal matrix composites of aluminum, magnesium and titanium are achieved by the addition of calcium hexaboride particles. The composition can be easily prepared with a minimum of stirring, and the product can be recycled if desired.

In another embodiment of the presently disclosed invention, a metal matrix material is made by combining solid metal particles with solid ceramic particles. The metal and ceramic particles are both in a dry powdered form and are mixed together in proportions according to the particular properties that are selected for the metal matrix composite. The metal and ceramic particle mixture is then compressed according to powdered metal processes for making metal matrix composites as are generally known in the art and described, for example, in U.S. Patents 5,486,223, and 5,895,696.

In the embodiment of the presently disclosed invention, the ceramic material is prepared in powdered form such as in a jet mill. The powdered ceramic material of calcium hexaboride is then blended with powdered metal of aluminum, magnesium, titanium, or combinations thereof to form a substantially uniform mixture of the ceramic/metal materials. In the preferred embodiment of the presently disclosed invention, the metal is in the range of about 1% to 50% by weight and the ceramic material is in the range of about 50% to 99% by weight.

As known to those skilled in the art, the ceramic/metal mixture is then placed in a mould and compressed under high pressure. As known to those skilled in the art of powdered metal technology, the mold is in the shape of the desired product so that a metal matrix composite product is formed. Conventional metal processing is then performed on the molded shape as required to produce the finished product.

It has been found that metal matrix composite material according to the powdered metal process has a modulus of elasticity in the range of about 140 to 170 GPa, density in the range of about 2.6 to 2.9 grams/c³, specific Modulus of about 50 to 70 GPa/g/c³, and a coefficient of thermal expansion in the range of about 8.0 to 12 ppm/°K.

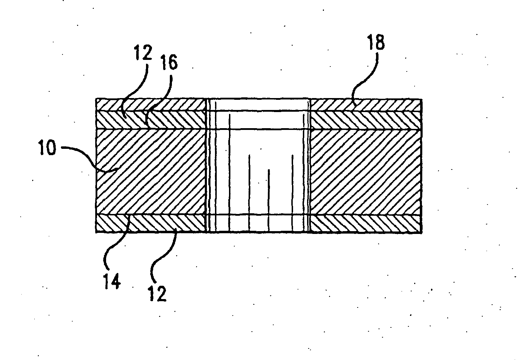

As an illustrative example shown in the Figure which is not in accordance with the disclosed invention, a metal matrix composite disk 10 such as the type that is suitable for use as a substrate for making computer memory storage disks is made by blending powdered aluminum metal with powdered silicon hexaboride. The aluminum/silicon hexaboride mixture is then placed in a mold that is in the general shape of the disk and pressed to form a metal matrix composite disk blank. Conventional metal shaping and finishing processes such as grinding and polishing are then preformed on the blank to produce a finished disk.

Also a layer of amorphous material 12 is added to the sides 14 and 16 of the metal matrix composite disk to form a metal matrix composite disk substrate. Preferably, layer of amorphous material 12 is a layer of nickel-phosphorous that covers the aluminum/silicon hexaboride matrix composite disk 10 to form the metal matrix composite disk substrate. The nickel-phosphorous layer 12 is added to the disk by electroless plating techniques as generally known to those skilled in the art such as described in U.S. Patent 5,895,696. Thereafter, a magnetic memory overlay layer 18 is added to the disk substrate to produce the memory disk. The magnetic memory overlay layer 18 is generally applied by vacuum sputtering deposition techniques that are also known to those skilled in the art.

## Claims

1. A memory disk substrate comprising a metal matrix composite, said metal matrix composite having particles of ceramic material being present in a range of 0.1 to 80 wt.% in the metal, said metal being selected from the group consisting of aluminum, magnesium, titanium and mixtures thereof, and said ceramic material being selected from calcium hexaboride.

2. The memory disk substrate in accordance with Claim 1, wherein said ceramic particles have an average particle size of 0.1 to 200 microns.

3. The memory disk substrate in accordance with claim 1 or 2, wherein said metal is aluminum.

4. The memory disk substrate in accordance with claim 1, wherein said metal matrix composite contains 5 to 40 wt.% calcium hexaboride having an average particle size of 10 microns and the remainder of the metal matrix composite is aluminum metal.

5. The memory disk substrate of claim 1, wherein said metal matrix composite material contains said ceramic material in the range of 1% to 50% by weight of the composite material.

6. The memory disk substrate of Claim 1, wherein said disk has a modulus of elasticity in the range of 70 to 180 GPa.

7. The memory disk substrate of Claim 1, wherein said disk has a density in the range of 2.6 to 2.9 g/cm³.

8. The memory disk substrate of Claim 1, wherein said composite material has a specific modulus in the range of 25 to 75 GPa/g/cm³.

9. The memory disk substrate of Claim 1, wherein said composite material has a coefficient of thermal expansion in the range of 8.9 to 21.5 ppm/K.

10. A memory disk substrate comprising the disk in accordance with Claim 1 and a layer of amorphous material that entirely covers the outer surface of said disk.

11. The memory disk substrate in accordance with Claim 10, wherein said amorphous layer comprises Nickel-Phosphorous.

## Patentansprüche

1. Memory-Scheibensubstrat, umfassend einen Metallmatrix-Verbundwerkstoff, wobei der Metallmatrix-Verbundwerkstoff Teilchen von Keramikmaterial, welches in einem Bereich von 0,1 bis 80 Gew.-% in dem Metall vorliegt, aufweist, wobei das Metall aus der Gruppe, bestehend aus Aluminium, Magnesium, Titan und Gemischen davon, ausgewählt ist, und das Keramikmaterial aus Calciumhexaborid ausgewählt ist.

2. Memory-Scheibensubstrat gemäß Anspruch 1, wobei die keramischen Teilchen eine durchschnittliche Teilchengröße von 0,1 bis 200 Mikrometer aufweisen.

3. Memory-Scheibensubstrat gemäß Anspruch 1 oder 2, wobei das Metall Aluminium ist.

4. Memory-Scheibensubstrat gemäß Anspruch 1, wobei der Metallmatrix-Verbundwerkstoff 5 bis 40 Gew.-% Calciumhexaborid mit einer durchschnittlichen Teilchengröße von 10 Mikrometer enthält, und wobei der Rest des Metallmatrix-Verbundwerkstoffs Aluminiummetall ist.

5. Memory-Scheibensubstrat gemäß Anspruch 1, wobei das Metallmatrix-Verbundwerkstoffmaterial das keramische Material in dem Bereich von 1 bis 50 Gew.-%, bezogen auf das Verbundwerkstoffmaterial, enthält.

6. Memory-Scheibensubstrat gemäß Anspruch 1, wobei die Scheibe einen Elastizitätsmodul in dem Bereich von 70 bis 180 GPa aufweist.

7. Memory-Scheibensubstrat gemäß Anspruch 1, wobei die Scheibe eine Dichte in dem Bereich von 2,6 bis 2,9 g/cm³ aufweist.

8. Memory-Scheibensubstrat gemäß Anspruch 1, wobei das Verbundwerkstoffmaterial einen spezifischen Modul in dem Bereich von 25 bis 75 GPa/g/cm³ aufweist.

9. Memory-Scheibensubstrat gemäß Anspruch 1, wobei das Verbundwerkstoffmaterial einen thermischen Expansionskoeffizienten in dem Bereich von 8,9 bis 21,5 ppm/K aufweist.

10. Memory-Scheibensubstrat, umfassend die Scheibe gemäß Anspruch 1 und eine Schicht von amorphem Material, die vollständig die äußere Oberfläche der Scheibe bedeckt.

11. Memory-Scheibensubstrat gemäß Anspruch 10, wobei die amorphe Schicht Nickel-Phosphor umfaßt.

## Revendications

1. Substrat de disque mémoire comprenant un composite à matrice métallique, ledit composite à matrice métallique ayant des particules de céramique présentes dans une plage allant de 0,1 à 80 % en poids dans le métal, ledit métal étant choisi dans le groupe constitué par l'aluminium, le magnésium, le titane et des mélanges de ceux-ci et ladite céramique étant choisie parmi l'hexaborure de calcium.

2. Substrat de disque mémoire selon la revendication 1, dans lequel lesdites particules de céramique ont une taille de particules moyenne allant de 0,1 à 200 microns.

3. Substrat de disque mémoire selon la revendication 1 ou 2, dans lequel ledit métal est l'aluminium.

4. Substrat de disque mémoire selon la revendication 1, dans lequel ledit composite à matrice métallique contient de 5 à 40 % en poids d'hexaborure de calcium ayant une taille de particules moyenne de 10 microns et le reste du composite à matrice métallique est de l'aluminium métallique.

5. Substrat de disque mémoire selon la revendication 1, dans lequel ledit composite à matrice métallique contient ladite céramique dans la plage allant de 1 % à 50 % en poids du matériau composite.

6. Substrat de disque mémoire selon la revendication 1, dans lequel ledit disque a un module d'élasticité dans la plage allant de 70 à 180 GPa.

7. Substrat de disque mémoire selon la revendication 1, dans lequel ledit disque a une masse volumique dans la plage allant de 2,6 à 2,9 g/cm³.

8. Substrat de disque mémoire selon la revendication 1, dans lequel ledit matériau composite a un module spécifique dans la plage allant de 25 à 75 GPa/g/cm³.

9. Substrat de disque mémoire selon la revendication 1, dans lequel ledit matériau composite a un coefficient de dilatation thermique dans la plage allant de 8,9 à 21,5 ppm/K.

10. Substrat de disque mémoire comprenant le disque selon la revendication 1 et une couche de matériau amorphe qui recouvre entièrement la surface extérieure dudit disque.

11. Substrat de disque mémoire selon la revendication 10, dans lequel ladite couche amorphe comprend un alliage de nickel-phosphore.
